# EUROPÄISCHE PATENTSCHRIFT

(11) **EP 4 304 914 B1**
(45) Veröffentlichungstag und Bekanntmachung des Hinweises auf die Patenterteilung: **09.04.2025**
(21) Anmeldenummer: 22706826.9
(22) Anmeldetag: 21.02.2022
(51) Int. Cl.: B61H 7/08

(54) **MAGNETSCHIENENBREMSE MIT IM ODER AM BETÄTIGUNGSZYLINDER VERBAUTER HOCHLAGENERKENNUNG**
MAGNETIC RAIL BRAKE WITH HIGH LEVEL DETECTION BUILT IN OR ON THE CONTROL CYLINDER
FREIN DE RAIL MAGNÉTIQUE AVEC DÉTECTION DE NIVEAU HAUT INTÉGRÉ DANS OU SUR LE VÉRIN DE COMMANDE

(30) Priorität: 10.03.2021 DE 102021001273
(43) Veröffentlichungstag der Anmeldung: 17.01.2024
(73) Patentinhaber: Knorr-Bremse Gesellschaft mit beschränkter Haftung, 2340 Mödling (AT)
(72) Erfinder: KATZLER, Dominik, 1120 Wien (AT); KASSAN, Michael, 2751 Steinabrückl (AT); TIPPELT, Daniel, 2700 Wiener Neustadt (AT); JOERGL, Volker, 2384 Breitenfurt (AT)
(74) Vertreter: Wiedemann, Markus
(86) Internationale Anmeldenummer: PCT/EP2022/054178
(87) Internationale Veröffentlichungsnummer: WO 2022/189127

(56) Entgegenhaltungen:
- EP-A2- 1 145 929
- CN-U- 209 700 684
- DE-A1- 19 518 893

## Beschreibung

Die Erfindung geht aus von Magnetschienenbremsvorrichtungen für ein Schienenfahrzeug, wenigstens aufweisend wenigstens einen druckmittelbetätigten Betätigungszylinder mit einem Zylindergehäuse und mit einem relativ zum Zylindergehäuse beweglichen Betätigungskolben, wenigstens eine Magneteinrichtung, welche über den Betätigungszylinder in eine Tieflage auf eine Schiene absenkbar ist, um durch einen magnetischen Kurzschluss mit der Schiene eine magnetische Anziehungskraft zwischen der Schiene und der wenigstens einen Magneteinrichtung zu erzeugen, und welche über den Betätigungszylinder in eine von der Schiene abgehobene Hochlage sowie in beliebige Zwischenlagen zwischen der Tieflage und der Hochlage stellbar ist, sowie wenigstens eine Hochlagenerkennungseinrichtung, welche bei einem Einnehmen der Hochlage der wenigstens einen Magneteinrichtung ein Hochlagensignal erzeugt, gemäß den Oberbegriffen der Ansprüche 1 und 7.

Üblicherweise ist die Magneteinrichtung oder Magnetschienenbremse am Drehgestell des Schienenfahrzeugs befestigt und verfügt beispielsweise über zwei längliche Gliedermagnete, die im nicht betätigten Zustand im Parallelabstand über den beiden Schienen eines Schienenstrangs angeordnet sind. Zur Vergleichmäßigung der Bremswirkung und zur gegenseitigen Führung der beiden Gliedermagnete sind diese einen Bremsrahmen miteinander gekoppelt, der sich in Querrichtung über die Breite des Schienenstrangs erstreckt, so dass durch die beiden Gliedermagnete und den Bremsrahmen eine Rechteckrahmenform gebildet wird. Die Betätigung jedes Gliedermagnets erfolgt über zwei in Schienenlängsrichtung hintereinanderliegende Betätigungszylinder, deren Betätigungskolben am Gliedermagnet angreifen und deren Betätigungszylinder am Drehgestell angeflanscht ist. Die Betätigungskolben sind durch Federvorspannung nach oben zum Drehgestell hin vorgespannt, so dass die Gliedermagnete aufgrund der Federwirkung der vier Betätigungskolben von der Schiene abgehoben sind. Zum Absenken der Gliedermagnete wird den Arbeitsräumen der Betätigungszylinder beispielsweise Druckluft zugeführt, wodurch auf den Betätigungskolben eine Druckkraft wirkt, die größer ist als die Federkraft, so dass die Betätigungskolben ausgefahren und die Gliedermagnete in Anlage auf die Schiene gebracht werden. Gleichzeitig werden die Gliedermagnete elektromagnetisch angeregt, so dass durch die entstehende magnetische Anziehungskraft und die Reibung zwischen Schiene und den Gliedermagneten eine Bremskraft aufgebaut wird, die eine über das Hauptbremssystem aufgebrachte Bremskraft unterstützt.

Aus CN 209 700 684 U und EP 1 145 929 A2 sind jeweils Magnetschienenbremsvorrichtungen bekannt.

Bei aus dem Stand der Technik bekannten Magnetschienenbremsvorrichtungen, beispielsweise aus DE 195 18 893 A1 ist zudem eine Hochlagenerkennungseinrichtung vorhanden, welche bei einem Einnehmen der Hochlage der wenigstens einen Magneteinrichtung ein Hochlagensignal erzeugt. Das Hochlagensignal, d.h. das Signal, durch welches die durch die Magneteinrichtung erreichte Hochlage signalisiert wird in einer elektronischen Steuerung ausgewertet, welche (auch) die Betätigungszylinder steuert.

Wünschenswert ist dabei, dass die Hochlagenerkennungseinrichtung als standardisierte Einheit ausgeführt wird, ohne dass projektspezifische Anpassungen des Drehgestells und der Magnetschienenbremse notwendig sind. Weiterhin soll die Hochlagenerkennungseinrichtung weitgehend unempfindlich gegenüber Umwelteinflüssen und auf einfache Weise montier- und demontierbar sein.

Der Erfindung liegt daher die Aufgabe zugrunde, eine Magnetschienenbremsvorrichtung derart fortzubilden, dass sie flexibel für eine Vielzahl von unterschiedlichen Magnetschieneneinrichtungen eingesetzt werden kann sowie robust gegenüber Umwelteinflüssen ist.

Diese Aufgabe wird erfindungsgemäß durch die Merkmale von Anspruch 1 und Anspruch 7 gelöst.

### Offenbarung der Erfindung

Beide Aspekte der Erfindung basieren auf einer Magnetschienenbremsvorrichtung für ein Schienenfahrzeug, wenigstens aufweisend wenigstens einen druckmittelbetätigten Betätigungszylinder mit einem Zylindergehäuse und mit einem relativ zum Zylindergehäuse beweglichen Betätigungskolben, wenigstens eine Magneteinrichtung, welche über den Betätigungszylinder in eine Tieflage auf eine Schiene absenkbar ist, um durch einen magnetischen Kurzschluss mit der Schiene eine magnetische Anziehungskraft zwischen der Schiene und der wenigstens einen Magneteinrichtung zu erzeugen, und welche über den Betätigungszylinder in eine von der Schiene abgehobene Hochlage sowie in beliebige Zwischenlagen zwischen der Tieflage und der Hochlage stellbar ist, sowie wenigstens eine Hochlagenerkennungseinrichtung, welche bei einem Einnehmen der Hochlage der wenigstens einen Magneteinrichtung ein Hochlagensignal erzeugt.

Die Magneteinrichtung kann durch einen Gliedermagneten oder durch einen Starrmagneten gebildet werden. Das Hochlagensignal, d.h. das Signal, durch welches die durch die Magneteinrichtung erreichte Hochlage signalisiert wird, wird beispielsweise in einer elektronischen Steuerung ausgewertet, welche (auch) den wenigstens einen Betätigungszylinder steuert.

Gemäß einem ersten Aspekt der Erfindung ist vorgesehen, dass die Hochlagenerkennungseinrichtung wenigstens einen innerhalb des Betätigungszylinders angeordneten elektrischen Endlagenschalter, z.B. ausgeführt als Mikroschalter, mit wenigstens zwei Schaltzuständen umfasst, welcher bei einem Einnehmen der Hochlage durch die Magneteinrichtung den Schaltzustand ändert.

Dabei ist der elektrische Endlagenschalter beispielsweise in einen elektrischen Kreis eingebunden, so dass eine Änderung des Schaltzustands des Endlagenschalters eine Änderung eines Signalpegels des elektrischen Kreises bedingt, der dann von der elektronischen Steuerung ausgewertet werden kann. Der Endlagenschalter kann beispielsweise bei einer Änderung seines Schaltzustands den elektrischen Kreis trennen, wenn er zuvor geschlossen war, und umgekehrt.

Bevorzugt ist der elektrische Endlagenschalter ausgebildet und angeordnet, dass er in der Hochlage der wenigstens einen Magneteinrichtung durch den Betätigungskolben mittelbar oder unmittelbar betätigt werden kann.

Weiterhin bevorzugt kann die Hochlagenerkennungseinrichtung eine Baueinheit umfassen, welche den Endlagenschalter aufweist und welche lösbar an oder in einer Deckelöffnung eines Deckels des Zylindergehäuses des Betätigungszylinders befestigt und derart angeordnet ist, dass der Endlagenschalter in einen Arbeitsraum des Betätigungszylinders hineinragt. Der Arbeitsraum des Betätigungszylinders ist durch Druckmittel belastbar oder von Druckmittel belastbar, um die Betätigungskolben des Betätigungszylinders zu betätigen. Die Baueinheit kann weiterhin auch eine Verkabelung umfassen, welche an den Endlagenschalter angeschlossen ist und aus dem Arbeitsraum heraus nach außen gezogen ist, um das vom Endlagenschalter erzeugte Signal beispielsweise an eine elektronische Steuerung zur Auswertung weiterzuleiten. Der Endlagenschalter kann insbesondere zwischen dem Deckel und einer Stirnfläche des Betätigungskolbens angeordnet sein. Auch kann die Baueinheit an oder in dem Deckel des Betätigungszylinders abgedichtet angeordnet oder befestigt sein. Der Deckel ist beispielsweise an dem Betätigungszylinder ebenfalls abgedichtet befestigt und verschließt beispielsweise eine stirnseitige Zylinderöffnung des Betätigungszylinders.

Die Baueinheit stellt dann ein Hochlagenerkennungsmodul dar, welche auf einfache Weise, nämlich lediglich durch abgedichtetes Einsetzen in die Durchgangsöffnung des Deckels des Betätigungszylinder montierbar und durch Lösen von dem Deckel des Betätigungszylinders demontierbar ist. Bevorzugt begrenzt der Deckel einen durch Druckmittel belastbaren und von Druckmittel entlastbaren Arbeitsraum des Betätigungszylinders, welcher andererseits von dem Betätigungskolben begrenzt wird, so dass der Deckel in einer vorteilhaften Doppelfunktion einerseits einen Befestigungsflansch für die Baueinheit und andererseits eine Begrenzung des abgedichteten Arbeitsraums des Betätigungszylinders ausbildet. Daher ist der Endlagerschalter in dem abgedichteten Arbeitsraum des Betätigungszylinders angeordnet und daher gegen Umwelteinflüsse geschützt.

Gemäß einer Weiterbildung kann der Endlagenschalter ein Schaltergehäuse und in Gebrauchslage gesehen ein am Schaltergehäuse außen angeordnetes, in eine ausgefahrene und eingefahrene Position bewegbares Betätigungselement aufweisen, wobei sich bei einer Bewegung des Betätigungselements zwischen der ausgefahrenen Position und der eingefahrenen Position der Schaltzustand des Endlagenschalters ändert. Weiterhin kann der Betätigungskolben eine zum Deckel weisende zentrale Ausnehmung mit einer radial inneren Umfangsfläche aufweisen, wobei das Betätigungselement des Endlagenschalters und die Ausnehmung im Betätigungskolben derart angeordnet sind und derart zusammenwirken, dass wenn die Magneteinrichtung sich in einer von der Hochlage abweichenden Zwischenlage oder in der Tieflage befindet, das Betätigungselement des Endlagenschalters außer Eingriff mit der radial inneren Umfangsfläche der Ausnehmung steht und dann die ausgefahrene Position einnimmt, aber wenn die Magneteinrichtung sich in der Hochlage befindet oder diese erreicht hat, das Betätigungselement des Endlagenschalters in Eingriff mit der radial inneren Umfangsfläche der Ausnehmung steht oder gerät und dann infolge des Kontakts in die eingefahrene Position gedrängt wird. Dabei kann das Betätigungselement des Endlagenschalters in die ausgefahrene Position federvorgespannt sein.

Die Integration des Hochlagenerkennungsmoduls bzw. der Baueinheit in den Betätigungszylinder gemäß dem ersten Aspekt ermöglicht beispielsweise dessen Befestigung am Deckel des Betätigungszylinders. Durch die einfache Befestigungsart kann das Hochlagenerkennungsmodul schnell aus der im Drehgestell eingebauten Magnetschienenbremsvorrichtung entfernt werden. Dadurch werden Reparatur, Wartung und Instandhaltung wesentlich erleichtert. Wegen des vor Umweltbedingungen geschützten Lage des Hochlagenerkennungsmoduls im Inneren des Betätigungszylinders kann auf zusätzliche Abdichtungen des Hochlagenerkennungsmoduls verzichtet werden. Der daraus resultierende einfache Aufbau des Hochlagenerkennungsmoduls senkt folglich Herstellkosten und erleichtert Reparatur und Instandhaltung.

Gemäß einem zweiten Aspekt der Erfindung ist vorgesehen, dass die Hochlagenerkennungseinrichtung eine in Bezug auf den wenigstens einen Betätigungszylinder separate Baueinheit umfasst, welche an dem Zylindergehäuse des Betätigungszylinders mittels einer Befestigungseinrichtung lösbar befestigt ist und wenigstens einen innerhalb eines Gehäuses der Hochlagenerkennungseinrichtung angeordneten elektrischen Endlagenschalter mit wenigstens zwei Schaltzuständen umfasst, wobei der Endlagenschalter ein in wenigstens zwei verschiedene Positionen stellbares Betätigungselement aufweist und sich beim Stellen des Betätigungselements zwischen den wenigstens zwei verschiedenen Positionen der Schaltzustand des Endlagenschalters zwischen den wenigstens zwei Schaltzuständen ändert, und wobei die Hochlagenerkennungseinrichtung wenigstens ein an oder in dem Gehäuse derart beweglich geführtes Aktuatorelement aufweist, dass das Aktuatorelement abhängig von der vertikalen Lage der wenigstens einen Magneteinrichtung seine Position in Bezug auf das Gehäuse ändert und dabei Einfluss auf die Position des Betätigungselements des Endlagenschalters nimmt.

Das Aktuatorelement ist insbesondere ein zylindrischer Körper, welcher im montierten Zustand der Baueinheit an dem Betätigungszylinder parallel zu dem Betätigungszylinder oder zu dem Betätigungskolben angeordnet ist.

Insbesondere ist die Baueinheit der Hochlagenerkennungseinrichtung ausschließlich und direkt an dem Betätigungszylinder bzw. an der Außenfläche des Zylindergehäuses mittels der lösbaren Befestigungseinrichtung befestigt. Auch kann die Befestigungseinrichtung in die Baueinheit integriert oder an ihr ausgebildet sein. Weiterhin stellt die Baueinheit der Hochlagenerkennungseinrichtung beispielsweise eine an dem Betätigungszylinder nachrüstbare Baueinheit dar. Dann kann die Baueinheit der Hochlagenerkennungseinrichtung auf einfache Weise an bereits bestehenden Betätigungszylindern nachgerüstet werden.

Die Baueinheit stellt dann beispielsweise ein Hochlagenerkennungsmodul dar, welche auf einfache Weise, nämlich lediglich durch lösbares Befestigen außen am Betätigungszylinder mittels der Befestigungseinrichtung montierbar und durch Lösen der Befestigungseinrichtung von dem Betätigungszylinder demontierbar ist.

Mit anderen Worten wird zur Detektion der Hochlage der Magneteinrichtung bevorzugt ein separates Hochlagenerkennungsmodul als Baueinheit bevorzugt an der Zylinderaußenwand des Befestigungszylinders befestigt, und zwar derart, dass das bevorzugt als Stempel ausgebildete Aktuatorelement ab einem einstellbaren Hub beispielsweise durch eine an dem Bremsrahmen gehaltenes, beispielsweise als Druckplatte ausgebildetes Anschlagelement in das Hochlagenerkennungsmodul eingeschoben wird. Ein in dem Hochlagenerkennungsmodul angeordneter Endlagenschalter wird daraufhin betätigt.

Vorzugsweise kann die Befestigungseinrichtung wenigstens ein an dem Gehäuse der Baueinheit befestigtes Spannband umfassen, welches in Umfangsrichtung gesehen das Zylindergehäuse wenigstens teilweise umspannt, wobei die Spannkraft beispielsweise einstellbar ist, insbesondere durch Spannschrauben. Folglich ist die Baueinheit bevorzugt durch Reibschluss an dem Zylindergehäuse durch die Spannkraft des wenigstens einen Spannbands gehalten und dadurch einfach montier- und demontierbar.

Auch können an der Außenfläche des Zylindergehäuses Zentrierflächen zur Zentrierung der Baueinheit an dem Zylindergehäuse vorgesehen sein, welche beispielsweise mit komplementären Zentrierflächen des wenigstens einen Spannbands und/oder der Baueinheit formschlüssig zusammenwirken, so dass durch die Zentrierflächen eine bestimmte Montageposition der Baueinheit an dem Betätigungszylinder definiert wird. Alternativ kann die Baueinheit in Bezug auf wenigstens einen Drehfreiheitsgrad und/oder einen Translationsfreiheitsgrad auch quasi stufenlos an dem Betätigungszylinder angebracht werden, indem die Baueinheit in einer eingenommenen definierten Position durch das wenigstens eine Spannband an dem Betätigungszylinder festgespannt und dann dort reibschlüssig gehalten wird.

Auch kann die Magnetschienenbremsvorrichtung einen Bremsrahmen umfassen, welcher zwei Magneteinrichtungen und zwei die Magneteinrichtungen miteinander verbindende Spurstangen aufweist, wobei der wenigstens eine Betätigungszylinder einerseits an dem Bremsrahmen und andererseits an einem Drehgestell befestigt ist.

Dabei kann der Bremsrahmen ein Anschlagelement aufweisen und die Baueinheit derart an dem wenigstens einen Betätigungszylinder angeordnet sein, dass das Aktuatorelement gegen das Anschlagelement anschlägt und sich dadurch die Position des Aktuatorelements in Bezug auf das Gehäuse ändert, wenn die wenigstens eine Magneteinrichtung die Hochlage erreicht oder erreicht hat. In den von der Hochlage abweichenden Lagen wie der Tieflage und in den Zwischenlagen befindet sich das Aktuatorelement dann beispielsweise außer Eingriff mit dem Anschlagelement. Auch kann das Aktuatorelement mit dem Anschlagelement außer Eingriff geraten und sich dadurch die Position des Aktuatorelements in Bezug auf das Gehäuse ändern, wenn die wenigstens eine Magneteinrichtung die Hochlage erreicht oder erreicht hat. In den von der Hochlage abweichenden Lagen wie der Tieflage und in den Zwischenlagen befindet sich das Aktuatorelement dann beispielsweise in Eingriff mit dem Anschlagelement. Das Aktuatorelement kann auch durch Federmittel in eine bestimmte Position vorgespannt sein.

Auch kann das Aktuatorelement in oder an dem Gehäuse derart geführt und angeordnet sein, dass es beim Einnehmen der Hochlage durch die wenigstens eine Magneteinrichtung in Eingriff mit dem Betätigungselement des Endlagenschalters gerät, wenn es beispielsweise in den von der Hochlage abweichenden Lagen wie der Tieflage und in den Zwischenlagen außer Eingriff mit dem Betätigungselement des Endlagenschalters gestanden hat. Alternativ könnte das Aktuatorelement beim Einnehmen der Hochlage durch die wenigstens eine Magneteinrichtung auch außer Eingriff mit dem Betätigungselement des Endlagenschalters geraten, wenn es beispielsweise in den von der Hochlage abweichenden Lagen wie der Tieflage und in den Zwischenlagen in Eingriff mit dem Betätigungselement des Endlagenschalters gestanden hat.

Auch kann die Hochlagenerkennungseinrichtung bzw. die Magnetschienenbremsvorrichtung eine elektronische Steuerung aufweisen, welche den Schaltzustand des elektrischen Endlagenschalters auswertet und optional auch den wenigstens einen Betätigungszylinder steuert. Dabei kann die elektronische Steuerung den wenigstens einen Betätigungszylinder insbesondere abhängig von dem von der Hochlagenerkennungseinrichtung erzeugten Hochlagensignal steuern.

Zusammenfassend ergeben sich die folgenden Vorteile: Durch die Unterbringung der Hochlagenerkennung bzw. des Hochlagenerkennungsmoduls am oder im Betätigungszylinder wird eine Standardposition für die Positionsüberwachung und eine Unabhängigkeit von den Drehgestell-Bauräumen geschaffen. Durch die Definition einer Standardposition wird die projektspezifische Einpassung der Magnetschienenbremse ins Drehgestell erleichtert und der Anpassungsaufwand gesenkt. Da aufgrund der Befestigung am oder im Betätigungszylinder keine eigene Schnittstelle zum Drehgestell benötigt wird, vereinfacht sich die Konstruktion des Drehgestells. Die standardisierte Position ermöglicht zudem eine unkomplizierte Nachrüstung in bestehende Drehgestelle.

Die Erfindung umfasst auch ein Schienenfahrzeug mit wenigstens einer oben beschriebenen Magnetschienenbremsvorrichtung.

### Zeichnungen

Ausführungsbeispiele der Erfindung sind in der Zeichnung dargestellt und in der nachfolgenden Beschreibung näher erläutert. In der Zeichnung zeigt
- Fig. 1: eine perspektivische Darstellung einer Magnetschienenbremsvorrichtung gemäß einem ersten Aspekt der Erfindung in einer Hochlage;
- Fig. 2: einen Ausschnitt aus Fig.1 mit einem Betätigungszylinder einer Magnetschienenbremsvorrichtung und einem direkt am Betätigungszylinder lösbar befestigten Hochlagenerkennungsmodul;
- Fig. 3: eine Einzeldarstellung des Hochlagenerkennungsmoduls von Fig. 2 in der Hochlage;
- Fig. 4: eine Einzeldarstellung des Hochlagenerkennungsmoduls von Fig. 2 in einer von der Hochlage abweichenden Lage;
- Fig. 5: eine Schnittdarstellung eines Betätigungszylinders einer Magnetschienenbremsvorrichtung in einer Hochlage mit einem Hochlagenerkennungsmodul gemäß einem zweiten Aspekt der Erfindung.

### Beschreibung der Ausführungsbeispiele

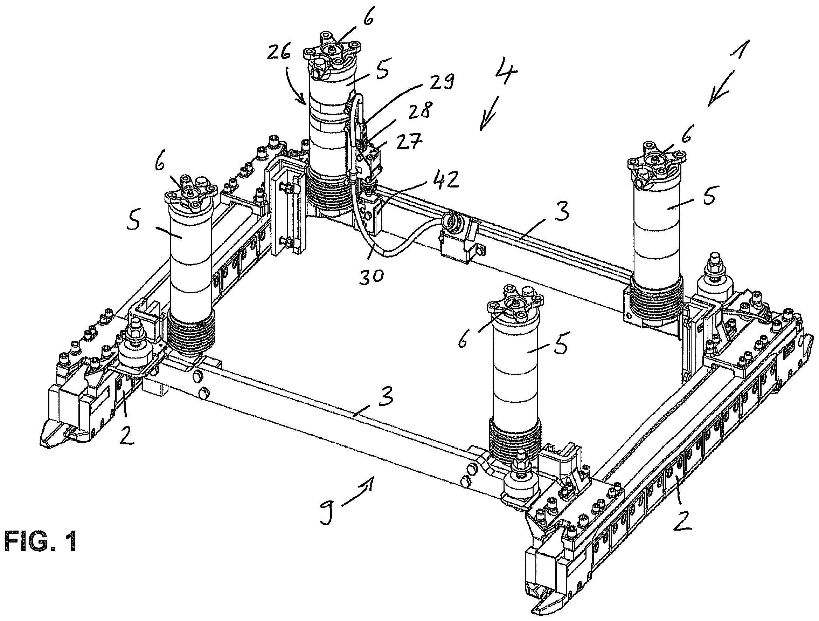

In **Fig. 1** ist eine perspektivische Darstellung einer Magnetschienenbremsvorrichtung 1 gemäß einem ersten Aspekt der Erfindung gezeigt. Die Magnetschienenbremsvorrichtung 1 hat einen rahmenförmigen Aufbau mit zwei im Bereich der Schienen angeordneten, hier beispielsweise als Gliedermagneten ausgeführten Magneteinrichtungen 2, die über zwei quer angeordnete Spurstangen 3 zu einem Bremsrahmen 4 verbunden sind. Insbesondere umfasst der Bremsrahmen 4 zwei Magneteinrichtungen 2, welche durch zwei in Bezug zu den beiden Magneteinrichtungen 2 quer und mit Parallelabstand zueinander angeordneten Spurstangen 3 miteinander verbunden sind. Die beiden Spurstangen 3 halten dann die beiden Magneteinrichtungen 2 im Spurabstand der Schienen. Anstatt als Gliedermagneten können die Magneteinrichtungen 2 auch als Starrmagneten ausgeführt sein.

Die Gliedermagneten 2 haben eine Vielzahl von Gliedern, die jeweils aus Hufeisenmagneten gebildet sind, denen eine Erregungsspule zugeordnet ist. Die Hufeisenmagnete sind mit ihren Schenkeln in Richtung auf die Schienen gerichtet, so dass der offene Teil jedes Magnets beim Absenken der Magneteinrichtungen 2 auf die Schienen magnetisch kurzgeschlossen wird. Die einzelnen Glieder der Gliedermagneten sind in Schienenlängsrichtung hintereinanderliegend angeordnet, so dass diese sich in Schienenlängsrichtung erstrecken. Zur Verschleißminderung und Optimierung des Reibwiderstandes sind an zu den Schienen weisenden Endabschnitten der Gliedermagneten 2 Gleitschuhe angeordnet. Zur Absenkung und Rückbewegung sind jedem Gliedermagneten 2 hier beispielsweise zwei Betätigungszylinder 5 zugeordnet, die über einen ersten Flansch 6 an einem hier nicht gezeigten Drehgestell befestigt sind und deren Betätigungskolben 7 an einer Kolbenstange 8 einen zweiten hier nicht gezeigten Flansch trägt, der beispielsweise an der zugeordneten Spurstange 3 angreift. Alternativ könnte der zweite Flansch auch mit einer Magneteinrichtung 2 verbunden sein. Der erste Flansch 6 ist so ausgebildet, dass er eine Relativdrehung zwischen dem Drehgestell und dem jeweiligen Betätigungszylinder 5 zulässt.

Der Bremsrahmen 4 mit den zwei Spurstangen 3 und den beiden Gliedermagneten 2 bildet zusammen mit den vier Betätigungszylindern 5 eine Magnetschienenbremseinheit 9 aus, die dann über die Betätigungszylinder 5 an dem Drehgestell festgelegt ist und auf die Schienen in eine Tieflage vertikal abgesenkt werden kann, in welcher die Magneteinrichtungen 2 bzw. die Gleitschuhe der Gliedermagneten 2 die Schienen kontaktieren, um durch einen magnetischen Kurzschluss mit der Schiene eine magnetische Anziehungskraft zwischen der Schiene und den Magneteinrichtungen 2 zu erzeugen. Andererseits kann die Magnetschienenbremseinheit 9 über die Betätigungszylinder 5 vertikal in eine von der Schiene abgehobene Hochlage sowie in beliebige Zwischenlagen zwischen der Tieflage und der Hochlage gestellt werden.

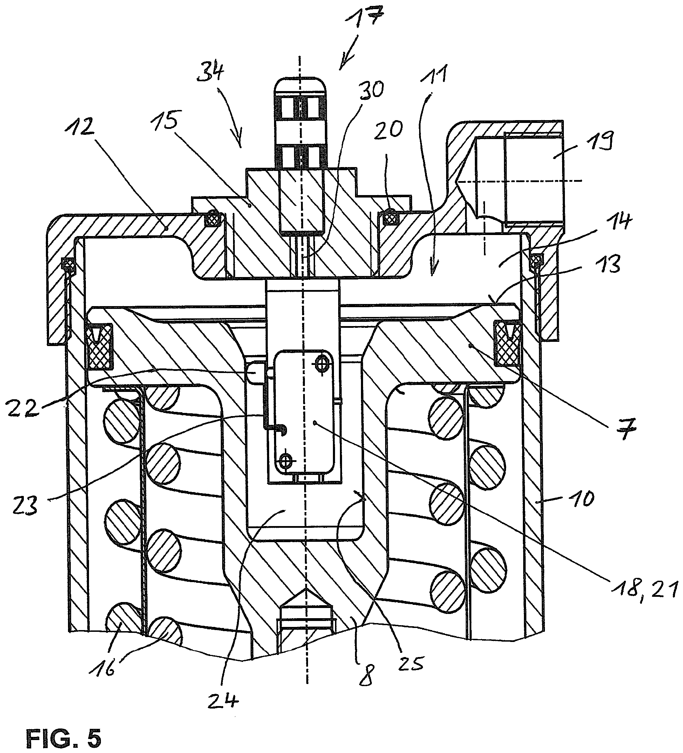

Die Betätigungszylinder 5 der Magnetschienenbremseinheit 9 sind hier beispielsweise an einen Druckmittelkreislauf angeschlossen. Wie **Fig. 5** zeigt, weisen die Betätigungszylinder 5 jeweils ein Zylindergehäuse 10 und den relativ zum Zylindergehäuse 5 beweglichen Betätigungskolben 7 auf. Zwischen einem eine Zylinderöffnung 11 des Zylindergehäuses 10 verschließenden Deckel 12, einer radial inneren Umfangsfläche des Zylindergehäuses 10 und einer Stirnfläche 13 des Betätigungskolbens 7 ist ein über einen Druckanschluss 19 durch das Druckmittel belastbarer und von dem Druckmittel entlastbarer Arbeitsraum 14 des Betätigungszylinders 5 ausgebildet. Folglich wird der Betätigungskolben 7 abhängig von dem Druck des Druckmittels in dem Arbeitsraum 14 betätigt. Der Betätigungskolben 7 weist eine Kolbenstange 8 auf, an welcher dann endseitig den zweiten Flansch trägt, der hier beispielsweise mit der zugeordneten Spurstange 3 verbunden ist. Der Betätigungskolben 7 ist durch sich an einem in **Fig. 5** nicht sichtbaren Boden des Betätigungszylinders 5 abstützende Federmittel 16 vorgespannt. Bei aus dem Betätigungszylinder 5 ausgefahrener Kolbenstange 8 nimmt die Magnetschienenbremseinheit 9 die Tieflage und bei in den Betätigungszylinder 5 eingefahrener Kolbenstange 8 die Hochlage ein, wie sie in **Fig. 1** gezeigt ist.

Durch entsprechende Ansteuerung des Druckmittelkreislaufs lassen sich daher die Betätigungskolben 7 bzw. deren Kolbenstangen 8 aus den Betätigungszylindern 5 ein- und ausfahren, so dass die Magnetschienenbremseinheit 9 in die Tieflage und damit in Anlage auf den Schienen, in die Hochlage, d.h. von den Schienen weitest möglich abgehoben oder in beliebige Zwischenlagen zwischen der Tieflage und der Hochlage gebracht werden kann. Zur Rückbewegung beispielsweise in die Hochlage wird der Druck in den Arbeitsräumen 14 der Betätigungszylinder 5 gesenkt, beispielsweise dadurch, dass die Arbeitsräume 14 mit einem Druckmittelspeicher verbunden werden, in welchen dann Druckmittel abfließt.

Die Übertragung der über die Magnetschienenbremseinheit 9 aufgebrachten Bremskraft auf das Drehgestell erfolgt über hier nicht dargestellte Mitnehmer, die auf drehgestellseitige Anschläge wirken. Zur Zentrierung der Magnetschienenbremseinheit 9 in ihrer nichtbetätigten Hochlage können an dieser Zentrierungen vorgesehen sein, die mitentsprechenden Gegenstücken des Drehgestells in Eingriff bringbar sind.

Die Magnetschienenbremsvorrichtung 1 weist außerdem eine Hochlagenerkennungseinrichtung 17 auf, welche bei einem Einnehmen der Hochlage der Magnetschienenbremseinheit 9 bzw. der beiden Magneteinrichtungen 2 ein Hochlagensignal erzeugt. Das Hochlagensignal, d.h. das Signal, durch welches die durch die Magnetschienenbremseinheit 9 erreichte Hochlage signalisiert wird, wird beispielsweise in einer hier nicht gezeigten elektronischen Steuerung ausgewertet, welche hier beispielsweise auch die Betätigungszylinder 5 steuert.

Wie aus **Fig. 5** hervorgeht kann die Hochlagenerkennungseinrichtung 17 einen innerhalb beispielsweise lediglich eines Betätigungszylinders 5 der hier vier Betätigungszylinder 5 angeordneten elektrischen Endlagenschalter 18 aufweisen, hier ausgeführt beispielsweise als Mikroschalter, welcher beispielsweise zwei Schaltzustände umfasst und welcher bei einem Einnehmen der Hochlage durch die Magnetschienenbremseinheit 9 bzw. durch die beiden Magneteinrichtungen 2 den Schaltzustand ändert. Dabei ist der elektrische Endlagenschalter 18 über eine elektrische Verbindung beispielsweise in einen elektrischen Kreis eingebunden, so dass eine Änderung des Schaltzustands des Endlagenschalters 18 eine Änderung eines Signalpegels des elektrischen Kreises bedingt, der dann von der elektronischen Steuerung ausgewertet werden kann. Abhängig von der Änderung des Schaltzustands des Endlagenschalters 18 wird dann von der elektronischen Steuerung das Hochlagensignal erzeugt bzw. die Änderung des Schaltzustands des Endlagenschalters 18 als Hochlagensignal interpretiert.

Bevorzugt ist der elektrische Endlagenschalter 18 in dem Betätigungszylinder ausgebildet und angeordnet, dass er in der Hochlage der Magnetschienenbremseinheit 9 bzw. der Magneteinrichtungen 2 durch den Betätigungskolben 7 des betreffenden Betätigungszylinders 5 beispielsweise unmittelbar betätigt werden kann und dadurch seinen Schaltzustand ändert.

Die Hochlagenerkennungseinrichtung 17 weist eine Baueinheit 15 auf, die den Endlagenschalter 18 umfasst und welche in einer zentralen Deckelöffnung 34 eines Deckels 12 lösbar befestigt ist. Der Deckel 12 verschließt eine zum ersten Flansch 6 weisende Zylinderöffnung 11 des Betätigungszylinders 5 dicht.

In der Einbaulage der Baueinheit 15 am oder im Deckel 12 ist der Endlagenschalter 18 dann derart angeordnet, dass er in das Innere des betreffenden Betätigungszylinders 5 hineinragt und dann in dem Arbeitsraum 14 zwischen dem Deckel 12 und der Stirnfläche 13 des Betätigungskolbens 7 angeordnet ist.

Dabei kann, wie in Fig. 5 dargestellt, der Endlagenschalter 18 zusammen mit einem Verbindungskabel 30, welches an den Endlagenschalter 18 angeschlossen und durch die Deckelöffnung 34 hindurchgeführt ist, um die Signale des Endlagenschalters 18 an eine elektronische Steuerung zur Auswertung zu liefern, eine an oder in dem Deckel 12 des Betätigungszylinder 5 lösbar befestigte Baueinheit 15 als Hochlagenerkennungsmodul ausbilden. Die Baueinheit 15 ist hier beispielsweise in der Deckelöffnung 34 des Deckels 12 unter Zwischenordnung einer Dichtung 20 abgedichtet befestigt.

Die Baueinheit 15 stellt dann ein Hochlagenerkennungsmodul dar, welche auf einfache Weise, nämlich lediglich durch Einsetzen in die Deckelöffnung 34 des Deckels 12 am Betätigungszylinder 5 montierbar und durch Lösen von dem Deckel 12 demontierbar ist. Dabei ist der Endlagerschalter 18 in dem abgedichteten Arbeitsraum 14 des Betätigungszylinders 5 angeordnet und daher gegen Umwelteinflüsse geschützt.

Der Endlagenschalter 18 weist ein beispielsweise quaderförmiges Schaltergehäuse 21 und in Gebrauchslage gesehen ein am Schaltergehäuse 21 seitlich außen angeordnetes, in eine ausgefahrene und eingefahrene Position bewegbares Betätigungselement 22 auf, wobei sich bei einer Bewegung des Betätigungselements zwischen der ausgefahrenen Position und der eingefahrenen Position der Schaltzustand des Endlagenschalters 18 ändert. Insbesondere ist das Betätigungselement 22 an einem Ende eines Hebels 23 angeordnet, der mit seinem anderen Ende drehbar an einem Schaltmechanismus im Schaltergehäuse 21 angelenkt ist, so dass eine in **Fig. 5** seitliche Betätigung des Betätigungselements 22 dieses in die eingefahrene Position stellt und damit eine Drehbewegung des Hebels 23 hervorruft, die wiederum den Schaltzustand des Endlagenschalters 18 ändert. Das Betätigungselement 22 bzw. der Hebel 23 kann beispielsweise durch Federmittel in die ausgefahrene Position vorgespannt.

Weiterhin weist der Betätigungskolben 7 beispielsweise in seiner Stirnfläche 13 eine zum Deckel 12 weisende zentrale Ausnehmung 24 mit einer radial inneren Umfangsfläche 25 auf, wobei das Betätigungselement 22 des Endlagenschalters 18 und die Ausnehmung 24 im Betätigungskolben derart angeordnet sind und derart zusammenwirken, dass wenn die Magnetschienenbremseinheit 9 bzw. die Magneteinrichtungen 2 sich in einer von der Hochlage abweichenden Zwischenlage oder in der Tieflage befindet (en), der Betätigungskolben 7 bzw. dessen Kolbenstange 8 ausgefahren ist und der Endlagenschalter 18 oder sein Betätigungselement 22 sich dann außerhalb der Ausnehmung befindet, wodurch das federvorgespannte Betätigungselement 22 des Endlagenschalters 18 die seitlich ausgefahrene Position einnimmt. Wenn aber die Magnetschienenbremseinheit 9 bzw. die Magneteinrichtungen 2 die Hochlage erreicht oder erreicht hat (haben), dann taucht der Endlagenschalter 18 bzw. das Betätigungselement 22 wenigstens axial in die Ausnehmung 24 ein, wodurch das Betätigungselement 22 die radial innere Umfangsfläche 25 der Ausnehmung 24 kontaktiert und infolge des Eintauchens und des Kontakts in die eingefahrene Position gedrängt wird, wie in **Fig. 5** gezeigt ist. Hilfreich beim Eintauchen des Betätigungselements 22 in die Ausnehmung 24 ist, dass die Ausnehmung 24 an ihrem Rand ein trichterförmig aufgeweitet ist. In dem hier beschriebenen Beispiel ist daher die Betätigungsrichtung des Betätigungselements 22 in etwa senkrecht in Bezug zur Bewegungsrichtung des Betätigungskolbens 7 des Betätigungszylinders 5.

Da die Magnetschienenbremseinheit 9 in der Praxis zu Vertikalschwingungen angeregt wird und sich daher auch bei eingenommener Hochlage innerhalb eines gewissen Vertikalhubbereichs bewegt, dient die axiale Tiefe der Ausnehmung 24 des Betätigungskolbens 7 als axialer Toleranzbereich für einen tolerierten Vertikalhubbereich der Magnetschienenbremseinheit 9 in der Hochlage, in welchem das Betätigungselement 22 des Endlagerschalters seine eingefahrene Position einnimmt, so dass dann dort auch keine Änderung des Schaltzustands des Endlagenschalters 18 stattfinden kann.

Die Integration als Hochlagenerkennungsmoduls ausgeführten Hochlagenerkennungseinrichtung 17 in wenigstens einen Betätigungszylinder 5 der vier Betätigungszylinder ermöglicht dessen Befestigung am Deckel 12 des Betätigungszylinders 5, wobei der Deckel 12 dann einen Bestandteil des Hochlagenerkennungsmoduls bzw. der Hochlagenerkennungseinrichtung 17 bildet. Durch die einfache Befestigungsart kann die Hochlagenerkennungseinrichtung 17 schnell aus der im Drehgestell eingebauten Magnetschienenbremsvorrichtung 1 entfernt werden. Dadurch werden Reparatur, Wartung und Instandhaltung wesentlich erleichtert. Wegen des vor Umweltbedingungen geschützten Lage der Hochlagenerkennungseinrichtung 17 im Inneren wenigstens eines der Betätigungszylinder 5 kann auf zusätzliche Abdichtungen der Hochlagenerkennungseinrichtung 17 verzichtet werden.

Gemäß einer weiteren, in **Fig. 1** bis **Fig. 4** gezeigten Ausführungsform kann die Hochlagenerkennungseinrichtung 17 eine in Bezug auf den oder die Betätigungszylinder 5, mit welchen sie zusammenwirkt, als separate Baueinheit ausgeführt sein, welche außen an dem Zylindergehäuse 10 hier beispielsweise lediglich eines Betätigungszylinders 5 mittels einer Befestigungseinrichtung 26 lösbar befestigt ist.

Die Hochlagenerkennungseinrichtung 17 umfasst hier vorzugsweise ebenfalls einen innerhalb eines Gehäuses 27 der Baueinheit angeordneten elektrischen Endlagenschalter 18 mit zwei Schaltzuständen, wobei der Endlagenschalter 18 beispielsweise wie bei der Ausführungsform von **Fig. 5** ausgebildet ist und ein quaderförmiges Schaltergehäuse 21 und in Gebrauchslage gesehen das am Schaltergehäuse 21 außen und seitlich angeordnete, in eine ausgefahrene und eingefahrene Position bewegbare Betätigungselement 22 aufweist, das an einem Ende des Hebels 23 befestigt ist. Wie bei der vorangehend beschriebenen Ausführung, ändert sich bei einer Bewegung des Betätigungselements 22 zwischen der ausgefahrenen Position und der eingefahrenen Position der Schaltzustand des Endlagenschalters 18.

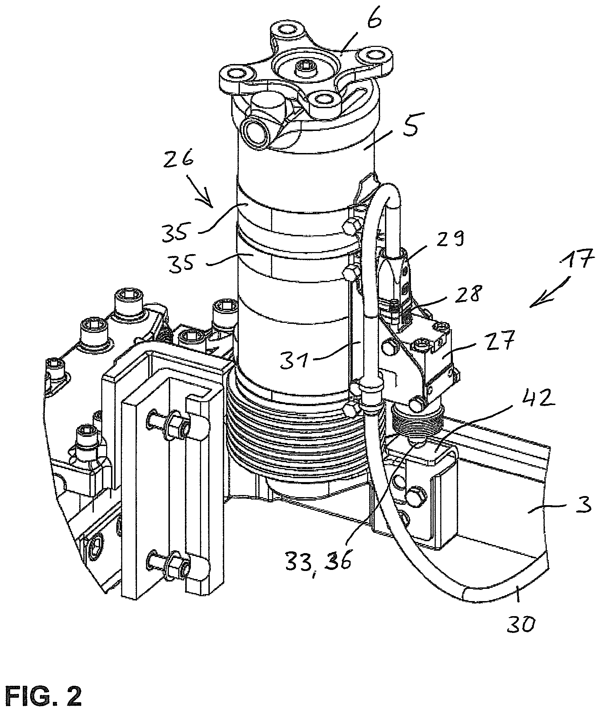

Wie **Fig. 2** zeigt, weist Hochlagenerkennungseinrichtung 17 an ihrem Gehäuse 27 einen Steckkontakt 28 auf, der im Inneren des Gehäuses 27 an den Endlagenschalter 18 angeschlossen ist und an welchen außen ein komplementärer Stecckontakt 29 gesteckt ist, der an ein Verbindungskabel 30 angeschlossen ist, das wiederum zu der elektronischen Steuerung gezogen ist, welche eine Änderung des Schaltzustands des Endlagenschalters 18 als Hochlagensignal auswertet.

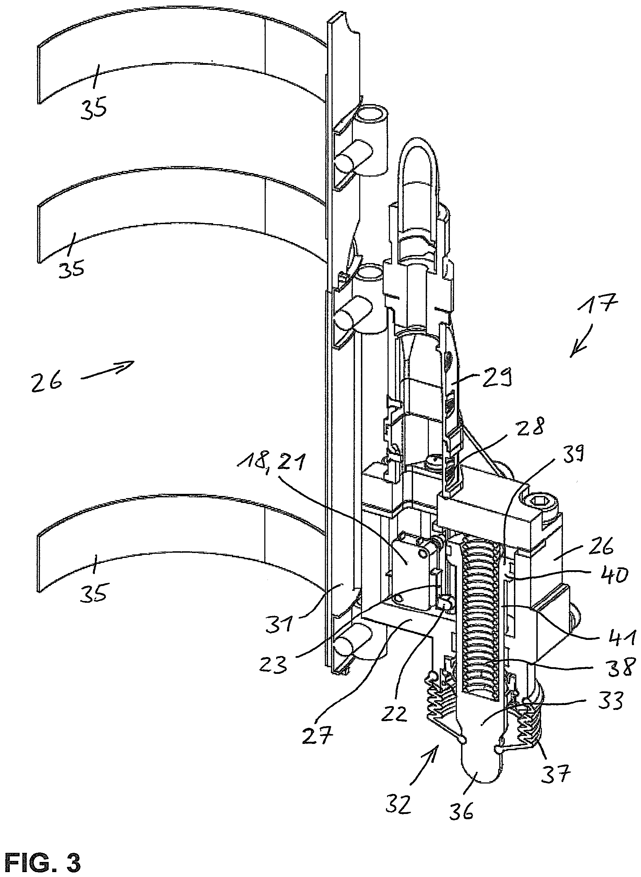

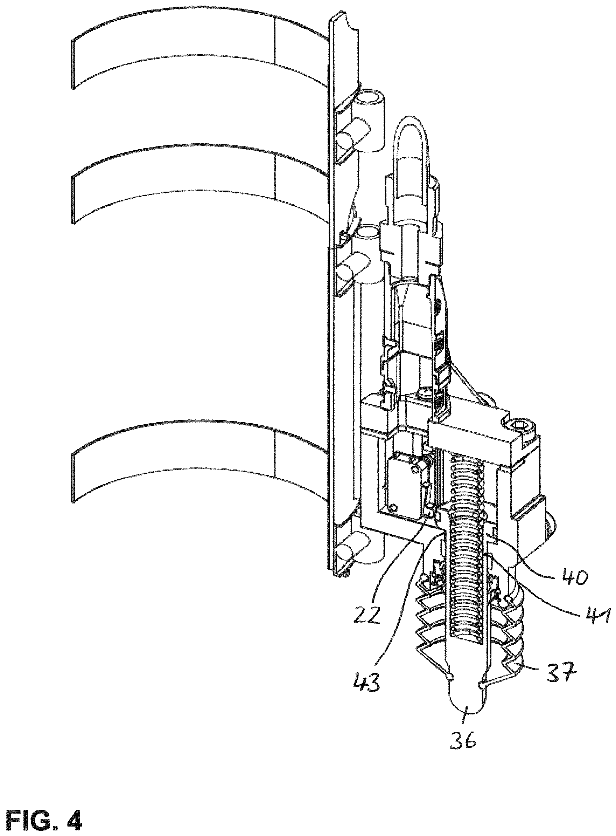

Das Gehäuse 27 der hier als separate Baueinheit ausgeführten Hochlagenerkennungseinrichtung 17 weist eine Befestigungskonsole 31 sowie ein aus einer Gehäuseöffnung 32 des Gehäuses 27 ragendes und in dem Gehäuse 27 beweglich geführtes Aktuatorelement 33 auf, wie insbesondere **Fig. 3** und **Fig. 4** illustrieren.

Die Befestigungskonsole 31 weist eine äußere Kontaktfläche auf, welche im montierten Zustand der Hochlagenerkennungseinrichtung 17 eine komplementär geformte Außenfläche des Betätigungszylinders 5 kontaktiert. Im vorliegenden Fall bilden die beiden Außenflächen beispielsweise Teilzylinderflächen oder Zylindersektorflächen mit im Wesentlichen identischem Radius aus, so dass dadurch eine gewisse Zentrierung der Hochlagenerkennungseinrichtung 17 an dem Betätigungszylinder 5 hervorgerufen wird, wenn die Hochlagenerkennungseinrichtung 17 mit dem Betätigungszylinder 5 zusammengespannt wird, wie anhand von **Fig. 2** bis **Fig. 4** leicht vorstellbar ist.

Über die Befestigungskonsole 31 ist die als Baueinheit ausgeführte Hochlagenerkennungseinrichtung 17 beispielsweise ausschließlich und direkt an dem Betätigungszylinder 5 bzw. an der Außenfläche des Zylindergehäuses 10 mittels einer lösbaren Befestigungseinrichtung 26 befestigt. Dann kann die Hochlagenerkennungseinrichtung 17 beispielsweise an einem beliebigen Betätigungszylinder 5 nachrüstbar sein. Vorzugsweise umfasst die Befestigungseinrichtung 26 zwei an der Befestigungskonsole 31 des Gehäuses 27 befestigte Spannbänder 35, welches in Umfangsrichtung gesehen das Zylindergehäuse 10 wenigstens teilweise umspannen, wobei die Spannkraft einstellbar ist, insbesondere durch Spannschrauben. Folglich ist die Hochlagenerkennungseinrichtung 17 bevorzugt durch Reibschluss an dem Zylindergehäuse 10 durch die Spannkraft der Spannbänder 35 gehalten und dadurch einfach montier- und demontierbar. Die Hochlagenerkennungseinrichtung 17 stellt hier ebenfalls ein Hochlagenerkennungsmodul dar, welche auf einfache Weise, nämlich lediglich durch lösbares Befestigen außen an einem beliebigen Betätigungszylinder 5 mittels Spannen der Befestigungseinrichtung 26 montierbar und durch Lösen der Befestigungseinrichtung 26 von dem betreffenden Betätigungszylinder 5 demontierbar ist.

Das Aktuatorelement 33 ist insbesondere ein zylindrischer Körper, welcher im montierten Zustand der Hochlagenerkennungseinrichtung 17 an dem Betätigungszylinder 5 beispielsweise parallel zu einer Mittelachse des Betätigungszylinders 5, des Betätigungskolbens 7 oder der Kolbenstange 8 angeordnet bzw. betätigbar ist. Das Aktuatorelement 33 ist insbesondere zwischen einer ausgefahrenen Stellung und einer eingefahrenen Stellung axial betätigbar, wobei ein erstes Ende 36 des Aktuatorelements 33 in beiden Stellungen noch aus der Gehäuseöffnung 32 des Gehäuses 27 herausragt. Durch Dichtmittel, hier beispielsweise durch einen einerseits an dem ersten Ende 36 des Aktuatorelements 33 und andererseits an dem Rand der Gehäuseöffnung 32 befestigten elastischen Faltenbalg 37 ist das Innere der Hochlagenerkennungseinrichtung 17 gegenüber der Umgebung abgedichtet. Folglich ist der Endlagenschalter 18 vollständig innerhalb des Gehäuses 27 der Hochlagenerkennungseinrichtung 17 abgedichtet angeordnet.

Besonders bevorzugt ist das Aktuatorelement 33 in die ausgefahrene Stellung durch Druckfedermittel 38 federvorgespannt, welche sich einerseits in einer zentralen Sacklochbohrung des Aktuatorelements 33 und andererseits an dem Gehäuse 27 abstützen. Weiterhin weist ein zweites, im Inneren des Gehäuses 27 angeordnetes Ende 39 des Aktuatorelements 33 einen beispielsweise umlaufenden Kragen 40 auf, mit welchem es auf die weiter unten beschriebene Weise das Betätigungselement 22 des Endlagenschalters 18 von der ausgefahrenen Stellung in die eingefahrene Stellung betätigen kann. Ein sich an das zweite Ende 39 anschließender Schaftabschnitt 41 des Aktuatorelements hat gegenüber dem Kragen 40 einen geringeren Durchmesser.

Die Hochlagenerkennungseinrichtung 17 ist als Baueinheit durch die Befestigungseinrichtung 26 an dem Betätigungszylinder 5 derart gehalten, dass das aus der Gehäuseöffnung 32 ragende erste Ende 36 des durch die Druckfedermittel 38 in die ausgefahrene Position vorgespannten Aktuatorelements 33 hier beispielsweise von einem an der zugeordneten Spurstange 3 angeordneten und hier beispielsweise als Druckplatte ausgebildeten Anschlagelement 42 insbesondere unmittelbar kontaktiert werden kann, wenn die Magnetschienenbremseinheit 9 bzw. die Magneteinrichtungen 2 die Hochlage einnimmt (einnehmen). Durch diesen Kontakt, der hier bevorzugt in der Hochlage der Magnetschienenbremseinheit 9 bzw. die Magneteinrichtungen 2 eintritt bzw. vorhanden ist, wird dann das Aktuatorelement 33 gegen die Wirkung der Druckfedermittel 38 in die eingefahrene Position von **Fig. 3** betätigt, in welcher das Betätigungselement 22 des Endlagerschalters 18 dem Schaftabschnitt 41 des Aktuatorelements 33 mit radialem Spiel gegenüberliegt und daher von diesem nicht betätigt werden kann. Weiterhin ist dann auch der Kragen 40 des Aktuatorelements 33 von dem Betätigungselement 22 des Endlagenschalters 18 axial beabstandet und kann diesen nicht betätigen.

Wie bereits zum Ausführungsbeispiel von **Fig. 5** ausgeführt, wird die Magnetschienenbremseinheit 9 in der Praxis zu Vertikalschwingungen angeregt und bewegt sich daher auch bei eingenommener Hochlage innerhalb eines gewissen Vertikalhubbereichs. Daher dient der gegenüber dem Kragen 40 im Durchmesser kleinere Schaftabschnitt 41 des Aktuatorelements 33 als hier beispielsweise axialer Toleranzbereich für einen tolerierten Vertikalhubbereich der Magnetschienenbremseinheit 9 in der Hochlage, in welchem das Betätigungselement 22 des Endlagerschalters 18 seine ausgefahrene Position einnehmen kann, weil innerhalb des Schaftabschnitts 41 des Aktuatorelements 33 das Betätigungselement 22 des Endlagerschalters 18 dem Schaftabschnitt 41 des Aktuatorelements 33 mit Spiel gegenüberliegt und diesen nicht kontaktiert, so dass in dem axialen Bereich des Schaftabschnitts 41, der den tolerierten Vertikalhubbereich in der Hochlage darstellt, auch keine Änderung des Schaltzustands des Endlagenschalters 18 stattfinden kann. In dem innerhalb des tolerierten Vertikalbereichs dann unveränderten Schaltzustand des Endlagenschalters 18, bei welchem hier beispielsweise das Betätigungselement 22 des Endlagenschalters 18 die ausgefahrene Position einnimmt, signalisiert dieser gemäß **Fig. 3** die Hochlage der Magnetschienenbremseinheit an die elektronische Steuerung als Hochlagensignal.

Wenn dann durch entsprechende Ansteuerung der Betätigungszylinder 5 die Betätigungskolben 7 aus den Betätigungszylindern 5 gefahren werden, damit die Magnetschienenbremseinheit 9 ausgehend von der Hochlage in Zwischenlagen und schließlich in die Tieflage gesteuert wird, bewegt sich das Aktuatorelement 33 infolge der Wirkung der Druckfedermittel 38 in **Fig. 3** nach unten, wobei das Betätigungselement 22 von dem radial beabstandeten Schaftabschnitt 41 zunächst weiterhin nicht betätigt wird, solange der Kragen 40 am zweiten Ende 39 des Aktuatorelements 33 noch nicht das vertikale Niveau des Betätigungselements 22 des Endlagenschalters 18 erreicht hat.

Wenn dann im Zuge der weiteren Abwärtsbewegung der Magnetschienenbremseinheit 9 am Ende des tolerierten Vertikalhubbereichs das erste Ende 36 des Aktuatorelements 33 außer Eingriff mit dem Anschlagelement 42 an der Spurstange 3 gerät, kommt andererseits der Kontakt des Kragens 40 mit dem Betätigungselement 22 des Endlagenschalters 18 gemäß **Fig. 4** zustande, wodurch dieses in die eingefahrene Position gedrängt wird und dadurch der Endlagenschalter 18 seinen Schaltzustand ändert und damit das Verlassen der Hochlage signalisiert, weil dann das Hochlagensignal nicht mehr erzeugt wird.

In von der Hochlage abweichenden Lagen wie den Zwischenlagen und in der Tieflage der Magnetschienenbremseinheit 9 besteht demnach vorzugsweise kein Kontakt zwischen dem ersten Ende 36 des Aktuatorelements 33 und dem Anschlagelement 42 an der Spurstange 3, wobei dann aber der Kragen 40 am zweiten Ende 39 bedingt durch die Druckkräfte der Druckfedermittel 38 gegen einen inneren Anschlag 43 am Gehäuse 27 anschlägt und sich dann das erste Ende 36 des Aktuatorelements 33 in seiner maximal ausgefahrenen Lage befindet.

Bei einem Rückstellen der Magnetschienenbremseinheit 9 von der Tieflage in die Hochlage laufen die oben beschriebenen Schritte in umgekehrter Reihenfolge statt, d.h. in der Tieflage als Ausgangslage ist das erste Ende 36 des Aktuatorelements außer Eingriff mit dem Anschlagelement 42 an der Spurstange 3 und der Kragen 40 des Aktuatorelements 33 steht in Kontakt mit dem Betätigungselement 22 des Endlagenschalters 18, wie in **Fig. 4** gezeigt. Dann ist das Betätigungselement 22 des Endlagenschalters 18 durch den Kragen gegen die Wirkung der Federkräfte in seine eingefahrene Position gedrängt und signalisiert dadurch eine von der Hochlage abweichende Lage der Magnetschienenbremseinheit 9.

Wenn dann die Magnetschienenbremseinheit 9 durch die Betätigungszylinder in die Hochlage gestellt wird, tritt vorzugsweise erst beim Erreichen der Hochlage das erste Ende 36 des Aktuatorelements 33 in Eingriff mit dem Anschlagelement 42 an der Spurstange 3. Durch die dadurch bedingte Verschiebung des Aktuatorelements 33 gegen die Wirkung der Druckfedermittel 38 tritt dann der Kragen 40 des Aktuatorelements 33 außer Eingriff mit dem Betätigungselement 22 des Endlagenschalters 18, wodurch dieses federbedingt in seine ausgefahrene Position gedrängt wird, in welcher es aber den Schaftabschnitt 41 des Aktuatorelements 33 nicht kontaktieren kann, wodurch der Endlagerschalter 18 seine Schaltstellung ändert und dadurch das Hochlagensignal erzeugt wird.

### Bezugszeichenliste

- 1: Magnetschienenbremsvorrichtung
- 2: Magneteinrichtungen/Gliedermagneten
- 3: Spurstangen
- 4: Bremsrahmen
- 5: Betätigungszylinder
- 6: erster Flansch
- 7: Betätigungskolben
- 8: Kolbenstange
- 9: Magnetschienenbremseinheit
- 10: Zylindergehäuse
- 11: Zylinderöffnung
- 12: Deckel
- 13: Stirnfläche
- 14: Arbeitsraum
- 15: Baueinheit
- 16: Federmittel
- 17: Hochlagenerkennungseinrichtung
- 18: Endlagenschalter
- 19: Druckanschluss
- 20: Dichtung
- 21: Schaltergehäuse
- 22: Betätigungselement
- 23: Hebel
- 24: Ausnehmung
- 25: radial innere Umfangsfläche
- 26: Befestigungseinrichtung
- 27: Gehäuse
- 28: Steckkontakt
- 29: komplementärer Steckkontakt
- 30: Verbindungskabel
- 31: Befestigungskonsole
- 32: Gehäuseöffnung
- 33: Aktuatorelement
- 34: Deckelöffnung
- 35: Spannbänder
- 36: erstes Ende
- 37: Dichtung/Faltenbalg
- 38: Druckfedermittel
- 39: zweites Ende
- 40: Kragen
- 41: Schaftabschnitt
- 42: Anschlagelement
- 43: innerer Anschlag

## Patentansprüche

1. Magnetschienenbremsvorrichtung (1) für ein Schienenfahrzeug, wenigstens aufweisend
a) wenigstens einen druckmittelbetätigten Betätigungszylinder (5) mit einem Zylindergehäuse (10) und mit einem relativ zum Zylindergehäuse (10) beweglichen Betätigungskolben (7),
b) wenigstens eine Magneteinrichtung (2), welche über den wenigstens einen Betätigungszylinder (5) in eine Tieflage auf eine Schiene absenkbar ist, um durch einen magnetischen Kurzschluss mit der Schiene eine magnetische Anziehungskraft zwischen der Schiene und der wenigstens einen Magneteinrichtung (2) zu erzeugen, und welche über den Betätigungszylinder (5) in eine von der Schiene abgehobene Hochlage sowie in beliebige Zwischenlagen zwischen der Tieflage und der Hochlage stellbar ist,
c) wenigstens eine Hochlagenerkennungseinrichtung (17), welche bei einem Einnehmen der Hochlage durch die wenigstens eine Magneteinrichtung (2) ein Hochlagensignal erzeugt, **dadurch gekennzeichnet, dass**
d) die Hochlagenerkennungseinrichtung (17) wenigstens einen innerhalb des Betätigungszylinders (5) angeordneten elektrischen Endlagenschalter (18) mit wenigstens zwei Schaltzuständen umfasst, welcher bei einem Einnehmen der Hochlage durch die Magneteinrichtung (2) den Schaltzustand ändert.

2. Magnetschienenbremsvorrichtung nach Anspruch 1, **dadurch gekennzeichnet, dass** der elektrische Endlagenschalter (18) in der Hochlage durch den Betätigungskolben (7) mittelbar oder unmittelbar betätigt ist.

3. Magnetschienenbremsvorrichtung nach Anspruch 2, **dadurch gekennzeichnet, dass** die Hochlagenerkennungseinrichtung (17) eine Baueinheit (15) umfasst, welche den Endlagenschalter (18) aufweist und welche lösbar an oder in einem Deckel (12) des Zylindergehäuses (10) des Betätigungszylinders (5) befestigt und derart angeordnet ist, dass der Endlagenschalter (18) in einen Arbeitsraum (14) des Betätigungszylinders (5) hineinragt.

4. Magnetschienenbremsvorrichtung nach Anspruch 3, **dadurch gekennzeichnet, dass** die Baueinheit (15) an oder in dem Deckel (12) des Betätigungszylinders (5) abgedichtet angeordnet ist.

5. Magnetschienenbremsvorrichtung nach Anspruch 3 oder 4, **dadurch gekennzeichnet, dass**
a) der Endlagenschalter (18) ein Schaltergehäuse (21) und in Gebrauchslage gesehen ein am Schaltergehäuse (21) außen angeordnetes, in eine ausgefahrene und eingefahrene Position bewegbares Betätigungselement (22) aufweist, wobei sich bei einer Bewegung des Betätigungselements (22) zwischen der ausgefahrenen Position und der eingefahrenen Position der Schaltzustand des Endlagenschalters (18) ändert, und dass
b) der Betätigungskolben (7) eine zum Arbeitsraum (14) weisende zentrale Ausnehmung (24) mit einer radial inneren Umfangsfläche (25) aufweist, wobei
c) das Betätigungselement (22) des Endlagenschalters (18) und die Ausnehmung (24) im Betätigungskolben (7) derart angeordnet sind und derart zusammenwirken, dass
c1) wenn die Magneteinrichtung (2) sich in einer von der Hochlage abweichenden Zwischenlage oder in der Tieflage befindet, das Betätigungselement (22) des Endlagenschalters (18) außer Eingriff mit der radial inneren Umfangsfläche (25) der Ausnehmung (24) steht und dann die ausgefahrene Position einnimmt, aber
c2) wenn die Magneteinrichtung (2) sich in der Hochlage befindet oder diese erreicht hat, das Betätigungselement (22) des Endlagenschalters (18) in Eingriff mit der radial inneren Umfangsfläche (25) der Ausnehmung (24) steht oder gerät und dann infolge des Kontakts in die eingefahrene Position gedrängt wird.

6. Magnetschienenbremsvorrichtung nach Anspruch 5, **dadurch gekennzeichnet, dass** das Betätigungselement (22) des Endlagenschalters (18) in die ausgefahrene Position federvorgespannt ist.

7. Magnetschienenbremsvorrichtung (1) für ein Schienenfahrzeug, wenigstens aufweisend
a) wenigstens einen druckmittelbetätigten Betätigungszylinder (5) mit einem Zylindergehäuse (10) und einem relativ zu dem Zylindergehäuse (10) beweglichen Betätigungskolben (7),
b) wenigstens eine Magneteinrichtung (2), welche über den wenigstens einen Betätigungszylinder (5) in eine Tieflage auf eine Schiene absenkbar ist, um durch einen magnetischen Kurzschluss mit der Schiene eine magnetische Anziehungskraft zwischen der Schiene und der wenigstens einen Magneteinrichtung (2) zu erzeugen, und welche über den Betätigungszylinder (5) in eine von der Schiene abgehobene Hochlage sowie in beliebige Zwischenlagen zwischen der Tieflage und der Hochlage stellbar ist,
c) wenigstens eine Hochlagenerkennungseinrichtung (17), welche bei einem Einnehmen der Hochlage durch die wenigstens eine Magneteinrichtung (2) ein Hochlagensignal erzeugt, **dadurch gekennzeichnet, dass**
d) die Hochlagenerkennungseinrichtung (17) eine in Bezug auf den wenigstens einen Betätigungszylinder (5) separate Baueinheit (26, 27) umfasst, welche an dem Zylindergehäuse (10) des wenigstens einen Betätigungszylinders (5) mittels einer Befestigungseinrichtung (26) lösbar befestigt ist und wenigstens einen innerhalb eines Gehäuses (27) der Hochlagenerkennungseinrichtung (17) angeordneten elektrischen Endlagenschalter (18) mit wenigstens zwei Schaltzuständen umfasst, wobei
e) der Endlagenschalter (18) ein in wenigstens zwei verschiedene Positionen stellbares Betätigungselement (22) aufweist und sich beim Stellen des Betätigungselements (22) zwischen den wenigstens zwei verschiedenen Positionen der Schaltzustand des Endlagenschalters (18) zwischen den wenigstens zwei Schaltzuständen ändert, und wobei
f) die Baueinheit (26, 27) wenigstens ein an oder in dem Gehäuse (27) derart beweglich geführtes Aktuatorelement (33) aufweist, dass das Aktuatorelement (33) abhängig von der vertikalen Lage der wenigstens einen Magneteinrichtung (22) seine Position in Bezug auf das Gehäuse (27) ändert und dabei Einfluss auf die Position des Betätigungselements (22) des Endlagenschalters (18) nimmt.

8. Magnetschienenbremsvorrichtung nach Anspruch 7, **dadurch gekennzeichnet, dass** die Befestigungseinrichtung (26) wenigstens ein an dem Gehäuse (27) der Baueinheit (26, 27) befestigtes Spannband (35) umfasst, welches in Umfangsrichtung gesehen das Zylindergehäuse (10) des wenigstens einen Betätigungszylinders (5) wenigstens teilweise umspannt.

9. Magnetschienenbremsvorrichtung nach Anspruch 7 oder 8, **dadurch gekennzeichnet, dass** die Baueinheit (26, 27) eine an dem wenigstens einen Betätigungszylinder (5) nachrüstbare Baueinheit darstellt.

10. Magnetschienenbremsvorrichtung nach einem der Ansprüche 7 bis 9, **dadurch gekennzeichnet, dass** sie einen Bremsrahmen (4) umfasst, welcher zwei Magneteinrichtungen (2) und zwei die Magneteinrichtungen (2) miteinander quer verbindende Spurstangen (3) aufweist, wobei der wenigstens eine Betätigungszylinder (5) einerseits an dem Bremsrahmen (4) und andererseits an einem Drehgestell befestigt ist.

11. Magnetschienenbremsvorrichtung nach Anspruch 10, **dadurch gekennzeichnet, dass** der Bremsrahmen (4) ein Anschlagelement (42) aufweist und die Baueinheit (26, 27) derart an dem wenigstens einen Betätigungszylinder (5) angeordnet ist, dass
a) das Aktuatorelement (33) gegen das Anschlagelement (42) anschlägt und sich dadurch die Position des Aktuatorelements (33) in Bezug auf das Gehäuse (27) ändert, wenn die wenigstens eine Magneteinrichtung (2) die Hochlage erreicht oder erreicht hat, und dass
b) das Aktuatorelement (33) mit dem Anschlagelement (42) außer Eingriff gerät und sich dadurch die Position des Aktuatorelements (33) in Bezug auf das Gehäuse (27) ändert, wenn die wenigstens eine Magneteinrichtung (2) die Hochlage erreicht oder erreicht hat.

12. Magnetschienenbremsvorrichtung nach einem der Ansprüche 7 bis 11, **dadurch gekennzeichnet, dass** das Aktuatorelement (33) in oder an dem Gehäuse (27) derart geführt und angeordnet ist, dass
a) es beim Einnehmen der Hochlage durch die wenigstens eine Magneteinrichtung (2) in Eingriff mit dem Betätigungselement (22) des Endlagenschalters (18) gerät, oder dass
b) es beim Einnehmen der Hochlage durch die wenigstens eine Magneteinrichtung (2) außer Eingriff mit dem Betätigungselement (22) des Endlagenschalters (18) gerät.

13. Magnetschienenbremsvorrichtung nach einem der vorhergehenden Ansprüche, **dadurch gekennzeichnet, dass** die Hochlagenerkennungseinrichtung eine elektronische Steuerung aufweist, welche den Schaltzustand des elektrischen Endlagenschalters (18) auswertet.

14. Schienenfahrzeug mit wenigstens einer Magnetschienenbremsvorrichtung (1) nach wenigstens einem der vorhergehenden Ansprüche.

## Claims

1. Magnetic rail brake device (1) for a rail vehicle, at least comprising
a) at least one pressure-medium actuated actuation cylinder (5) with a cylinder housing (10) and with an actuation piston (7) that is movable relative to the cylinder housing (10),
b) at least one magnet apparatus (2), which can be lowered into a low position on a rail by means of the at least one actuation cylinder (5), in order to generate a magnetic attraction force between the rail and the at least one magnet apparatus (2) by means of a magnetic short circuit with the rail, and which can be placed in a high position raised from the rail, as well as in any intermediate positions between the low position and the high position, by means of the actuation cylinder (5),
c) at least one high position detection apparatus (17), which generates a high position signal when the high position is assumed by the at least one magnet apparatus (2), **characterized in that**
d) the high position detection apparatus (17) comprises at least one electrical limit switch (18) with at least two switching states arranged inside the actuation cylinder (5), which changes the switching state when the high position is assumed by the magnet apparatus (2).

2. Magnetic rail brake device according to claim 1, **characterized in that** the electrical limit switch (18) can be directly or indirectly actuated in the high position by means of the actuation piston (7).

3. Magnetic rail brake device according to claim 2, **characterized in that** the high position detection apparatus (17) comprises a unit (15), which contains the limit switch (18) and which is releasably attached on or in a cover (12) of the cylinder housing (10) of the actuation cylinder (5) and is arranged such that the limit switch (18) protrudes into a working chamber (14) of the actuation cylinder (5).

4. Magnetic rail brake device according to claim 3, **characterized in that** the unit (15) is arranged sealed on or in the cover (12) of the actuation cylinder (5).

5. Magnetic rail brake device according to claim 3 or 4, **characterized in that**
a) the limit switch (18) has a switch housing (21) and, when viewed in use, an actuation element (22) arranged on the outside of switch housing (21), which can be moved into an extended and retracted position, wherein, on movement of the actuation element (22) between the extended position and the retracted position, the switching state of the limit switch (18) changes, and **in that**
b) the actuation piston (7) has a central recess (24) facing the working chamber (14) with a radially inner circumferential surface (25), wherein
c) the actuation element (22) of the limit switch (18) and the recess (24) are arranged and interact in the actuation piston (7) such that
c1) when the magnet apparatus (2) is in an intermediate position differing from the high position or in the low position, the actuation element (22) of the limit switch (18) is disengaged from the radially inner circumferential surface (25) of the recess (24) and, in this case, assumes the extended position, but
c2) when the magnet apparatus (2) is in the high position or has reached it, the actuation element (22) of the limit switch (18) is engaged or engages with the radially inner circumferential surface (25) of the recess (24) and, in this case, is forced into the retracted position as the result of the contact.

6. Magnetic rail brake device according to claim 5, **characterized in that** the actuation element (22) of the limit switch (18) is spring-loaded in the extended position.

7. Magnetic rail brake device (1) for a rail vehicle, at least comprising
a) at least one pressure-medium actuated actuation cylinder (5) with a cylinder housing (10) and actuation piston (7) that is movable relative to the cylinder housing (10),
b) at least one magnet apparatus (2), which can be lowered into a low position on a rail by means of the at least one actuation cylinder (5), in order to generate a magnetic attraction force between the rail and the at least one magnet apparatus (2) by means of a magnetic short circuit with the rail, and which can be placed in a high position raised from the rail, as well as in any intermediate positions between the low position and the high position, by means of the actuation cylinder (5),
c) at least one high position detection apparatus (17), which generates a high position signal when the high position is assumed by the at least one magnet apparatus (2), **characterized in that**
d) the high position detection apparatus (17) comprises a unit (26, 27) that is separate from the at least one actuation cylinder (5), which is releasably attached to the cylinder housing (10) of the at least one actuation cylinder (5) by means of a retaining apparatus (26) and at least one electrical limit switch (18) with at least two switching states arranged inside a housing (27) of the high position detection apparatus (17), wherein
e) the limit switch (18) has an actuation element (22) that can be placed in at least two different positions and, when the actuation element (22) is placed between the at least two different positions, the switching state of the limit switch (18) changes between the at least two switching states, and wherein
f) the unit (26, 27) has at least one actuator element (33) which is movably guided on or in the housing (27) such that the actuator element (33) changes its position relative to the housing (27) depending on the vertical position of the at least one magnet apparatus (22) and thereby influences the position of the actuation element (22) of the limit switch (18).

8. Magnetic rail brake device according to claim 7, **characterized in that** the retaining apparatus (26) comprises at least one tensioning strap (35) attached to the housing (27) of the unit (26, 27), which, when viewed in a circumferential direction, at least partially spans the cylinder housing (10) of the at least one actuation cylinder (5).

9. Magnetic rail brake device according to claim 7 or 8, **characterized in that** the unit (26, 27) constitutes a unit that can be retrofitted to the at least one actuation cylinder (5).

10. Magnetic rail brake device according to any one of claims 7 to 9, **characterized in that** it comprises a brake frame (4), which has two magnet apparatuses (2) and two tie rods (3) cross-connecting the magnet apparatuses (2) to one another, wherein the at least one actuation cylinder (5) is attached on one side to the brake frame (4) and on the other side to a bogie.

11. Magnetic rail brake device according to claim 10, **characterized in that** the brake frame (4) has a stop element (42) and the unit (26, 27) is arranged on the least one actuation cylinder (5) such that
a) the actuator element (33) strikes the stop element (42) and, as a result, changes the position of the actuator element (33) relative to the housing (27), when the at least one magnet apparatus (2) reaches or has reached the high position, and that
b) the actuator element (33) disengages from the stop element (42) and, as a result, changes the position of the actuator element (33) relative to the housing (27), when the at least one magnet apparatus (2) reaches or has reached the high position.

12. Magnetic rail brake device according to any one of claims 7 to 11, **characterized in that** the actuator element (33) is guided and arranged in or on the housing (27) such that
a) it engages with the actuation element (22) of the limit switch (18) when the high position is assumed by the at least one magnet apparatus (2), or that
b) it disengages from the actuation element (22) of the limit switch (18) when the high position is assumed by the at least one magnet apparatus (2).

13. Magnetic rail brake device according to any one of the preceding claims, **characterized in that** the high position detection apparatus has an electronic controller, which analyses the switching state of the electrical limit switch (18).

14. Rail vehicle with at least one magnetic rail brake device (1) according to at least one of the preceding claims.

## Revendications

1. Dispositif de frein de rail magnétique (1) pour un véhicule ferroviaire, présentant au moins
a) au moins un cylindre d'actionnement (5) actionné par un fluide sous pression, avec un carter de cylindre (10) et avec un piston d'actionnement (7) mobile par rapport au carter de cylindre (10),
b) au moins un appareil magnétique (2) qui peut être abaissé dans une position basse sur un rail par l'intermédiaire du au moins un cylindre d'actionnement (5) pour générer une force d'attraction magnétique entre le rail et le au moins un appareil magnétique (2) par un court-circuit magnétique avec le rail, et qui peut être réglé par l'intermédiaire du cylindre d'actionnement (5) dans une position haute surélevée par rapport au rail ainsi que dans des positions intermédiaires quelconques entre la position basse et la position haute,
c) au moins un appareil de détection de position haute (17) qui génère un signal de position haute lorsque la position haute est adoptée par le au moins un appareil magnétique (2), **caractérisé en ce que**
d) l'appareil de détection de position haute (17) comprend au moins un commutateur de fin de course électrique (18) disposé à l'intérieur du cylindre d'actionnement (5) avec au moins deux états de commutation, commutateur qui change l'état de commutation lorsque la position haute est adoptée apar l'appareil magnétique (2).

2. Dispositif de frein de rail magnétique selon la revendication 1, **caractérisé en ce que** le commutateur de fin de course électrique (18) est actionné directement ou indirectement par le piston d'actionnement (7) dans la position haute.

3. Dispositif de frein de rail magnétique selon la revendication 2, **caractérisé en ce que** le dispositif de détection de position haute (17) comprend un module (15) qui présente le commutateur de fin de course (18) et est fixé de manière amovible au niveau de ou dans un couvercle (12) du carter de cylindre (10) du cylindre d'actionnement (5) et est disposé de sorte que le commutateurde fin de course (18) fasse saillie dans un espace de travail (14) du cylindre d'actionnement (5).

4. Dispositif de frein de rail magnétique selon la revendication 3, **caractérisé en ce que** le module (15) est disposé de manière étanche au niveau de ou dans le couvercle (12) du cylindre d'actionnement (5).

5. Dispositif de frein de rail magnétique selon la revendication 3 ou 4, **caractérisé en ce que**
a) le commutateur de fin de course (18) présente un boîtier de commutateur (21) et, vu en position d'utilisation, un élément d'actionnement (22) disposé à l'extérieur au niveau du boîtier de commutateur (21) et mobile dans une position déployée et rétractée, dans lequel l'état de commutation du commutateur de fin de course (18) change lors d'un mouvement de l'élément d'actionnement (22) entre la position déployée et la position rétractée, et **en ce que**
b) le piston d'actionnement (7) présente un évidement central (24) orienté vers l'espace de travail (14) avec une surface périphérique radialement intérieure (25), dans lequel
c) l'élément d'actionnement (22) du commutateur de fin de course (18) et l'évidement (24) dans le piston d'actionnement (7) sont disposés et coopèrent de sorte que
c1) lorsque l'appareil magnétique (2) se trouve dans une position intermédiaire différente de la position haute ou dans la position basse, l'élément d'actionnement (22) du commutateur de fin de course (18) n'est pas en prise avec la surface périphérique radialement intérieure (25) de l'évidement (24) et prend alors la position déployée, mais
c2 )lorsque l'appareil magnétique (2) se trouve dans la position haute ou a atteint celle-ci, l'élément d'actionnement (22) du commutateur de fin de course (18) est ou vient en prise avec la surface périphérique radialement intérieure (25) de l'évidement (24), puis est poussé dans la position rétractée à la suite du contact.

6. Dispositif de frein de rail magnétique selon la revendication 5, **caractérisé en ce que** l'élément d'actionnement (22) du commutateur de fin de course (18) est précontraint par ressort dans la position déployée.

7. Dispositif de frein de rail magnétique (1) pour un véhicule ferroviaire, présentant au moins
a) au moins un cylindre d'actionnement (5) actionné par un fluide sous pression, avec un carter de cylindre (10) et un piston d'actionnement (7) mobile par rapport au carter de cylindre (10),
b) au moins un appareil magnétique (2) qui peut être abaissé dans une position basse sur un rail par l'intermédiaire du au moins un cylindre d'actionnement (5) pour générer une force d'attraction magnétique entre le rail et le au moins un appareil magnétique (2) par un court-circuit magnétique avec le rail, et qui peut être réglé par l'intermédiaire du cylindre d'actionnement (5) dans une position haute surélevée par rapport au rail ainsi que dans des positions intermédiaires quelconques entre la position basse et la position haute,
c) au moins un appareil de détection de position haute (17) qui génère un signal de position haute lorsque la position haute est adoptée par le au moins un appareil magnétique (2), **caractérisé en ce que**
d) l'appareil de détection de position haute (17) comprend un module (26, 27) séparé par rapport à l'au moins un cylindre d'actionnement (5), module qui est fixé de manière amovible au niveau du carter de cylindre (10) de l'au moins un cylindre d'actionnement (5) au moyen d'un appareil de fixation (26) et comprend au moins un commutateur de fin de course électrique (18) disposé à l'intérieur d'un boîtier (27) de l'appareil de détection de position haute (17) avec au moins deux états de commutation, dans lequel
e) le commutateur de fin de course (18) présente un élément d'actionnement (22) pouvant être réglé dans au moins deux positions différentes et, lorsque l'élément d'actionnement (22) est placé entre les au moins deux positions différentes, l'état de commutation du commutateur de fin de course (18) change entre les au moins deux états de commutation, et dans lequel
f) le module (26, 27) présente au moins un élément d'actionneur (33) guidé de manière mobile au niveau du ou dans le boîtier (27) de sorte que l'élément d'actionneur (33) change sa position par rapport au boîtier (27) en fonction de la position verticale de l'au moins un appareil magnétique (22) et exerce ainsi une influence sur la position de l'élément d'actionnement (22) du commutateur de fin de course (18).

8. Dispositif de frein de rail magnétique selon la revendication 7, **caractérisé en ce que** l'appareil de fixation (26) comprend au moins une bande de serrage (35) fixée au boîtier (27) du module (26, 27) qui, vue dans la direction circonférentielle, entoure au moins partiellement le carter de cylindre (10) de l'au moins un cylindre d'actionnement (5).

9. Dispositif de frein de rail magnétique selon la revendication 7 ou 8, **caractérisé en ce que** le module (26, 27) représente un module pouvant être mis à niveau sur le au moins un cylindre d'actionnement (5).

10. Dispositif de frein de rail magnétique selon l'une quelconque des revendications 7 à 9, **caractérisé en ce qu'il** comprend un cadre de freinage (4) qui présente deux appareils magnétiques (2) et deux barres d'accouplement (3) connectant transversalement les appareils magnétiques (2) entre eux, dans lequel le au moins un cylindre d'actionnement (5) est fixé d'une part au cadre de freinage (4) et d'autre part à un bogie.

11. Dispositif de frein de rail magnétique selon la revendication 10, **caractérisé en ce que** le cadre de freinage (4) présente un élément de butée (42) et le module (26, 27) est disposé sur le au moins un cylindre d'actionnement (5) de sorte que
a) l'élément d'actionneur (33) bute contre l'élément de butée (42) et change ainsi la position de l'élément d'actionneur (33) par rapport au boîtier (27) lorsque le au moins un appareil magnétique (2) atteint ou a atteint la position haute, et **en ce que**
b) l'élément d'actionneur (33) se désengage de l'élément de butée (42) et change ainsi la position de l'élément d'actionneur (33) par rapport au boîtier (27) lorsque le au moins un appareil magnétique (2) atteint ou a atteint la position haute.

12. Dispositif de frein de rail magnétique selon l'une quelconque des revendications 7 à 11, **caractérisé en ce que** l'élément d'actionneur (33) est guidé et disposé au niveau du ou sur le boîtier (27) de sorte que
a) il entre en prise avec l'élément d'actionnement (22) du commutateur de fin de course (18) lorsque la position haute est adoptée par le au moins un appareil magnétique (2), ou **en ce que**
a) il se désengage de l'élément d'actionnement (22) du commutateur de fin de course (18) lorsque la position haute est adoptée par le au moins un appareil magnétique (2).

13. Dispositif de frein de rail magnétique selon l'une quelconque des revendications précédentes, **caractérisé en ce que** le dispositif de détection de position haute présente une commande électronique qui évalue l'état de commutation du commutateur de fin de course électrique (18).

14. Véhicule ferroviaire avec au moins un dispositif de frein de rail magnétique (1) selon au moins l'une quelconque des revendications précédentes.
